# EUROPEAN PATENT APPLICATION

(11) **EP 2 410 259 A1**
(43) Date of publication of application: **25.01.2012**
(21) Application number: 10380097.5
(22) Date of filing: 23.07.2010
(51) Int. Cl.: F24J 2/52, F16B 43/00

(54) **Alignment system for heliostats**

(71) Applicant: Sener Ingenieria Y Sistemas, S.A., 48930 Las Arenas - Guecho, Vizcaya (ES)
(72) Inventor: Lata Pérez, Jesús Maria, 48014 Bilbao (ES)
(74) Representative: Carvajal y Urquijo, Isabel

(57) **Abstract**

Alignment system for adjusting heliostab (3) of a solar thermal plant which comprises on each support of each heliostat facet:
- a connecting bolt (5) between the facet (1) and the supporting means (8,10) of each facet (1),
- a mechanical element (9) to receive the bolt (5), located in the facet (1),
- a nut (6)-washer (7) assembly for preloading the bolt (5), located in the facet supporting means (8,10),
- at least one removable washer (2) surrounding the bolt (9) between the facet supporting means (8,10) and the facet (1),
thus regulating the canting of heliostats (3) by varying the number of washers (2) between the facet supporting means (8,10) and the facet (1).

## Description

### Field of the invention

The present invention refers to the field of canting methods employed in heliostats in a solar thermal plant.

### Background of the invention

Current canting systems are based on a worm gear mechanism, with which it is obtained a continuous variation of the distance between each interface point of the facet regarding the bearing structure. These systems have disadvantages such as complex workshop mounting, generating weak mechanical joinings and the lack of canting traceability of each facet, so if a facet is broken in field, with the current continuous canting systems and after having removed the broken facet, it is not possible to guarantee that the new one will be placed at the same position without having to measure again, which in field is very complicated and implies costly field recanting.

### Description of the invention

The present invention refers to a system of canting of discrete regulation through washers.

The canting system object of the invention comprises a plurality of washers that can be attached or removed (some of them are lock washers and the rest flat washers so that they can be mounted once everything is mounted) in each interface joining point of the facets with the heliostat structure that supports them, to the needed point for the facet to have the required orientation, and in that way, for the heliostat to "aim" correctly, according to the position of the field in which it is located and, consequently, to its distance to the receptor to which it has to point to generate the right spot.

This system of canting of discrete regulation is characterized in that:
- It uses washer of different thickness, some lock washers and others flat washers (so that they can be mounted once everything is mounted).
- It assumes, according to the thickness of the thinnest washer (usually 1 mm), the inherent error to be a discrete canting rather than a continuous one,
- It is a canting system easier to mount,
- Fastness and economy in the process of broken facet substitution due to the traceability of the canting of each facet in field, since, in case of breaking, by mounting the new facet with the same washers in each supporting point, it is guaranteed that the substituted facet will keep the canting of the previous one without any measures, that is to say, costly recanting in field is not necessary.
- It is structurally more robust to carry loads since the whole washer-nut assembly acts as a preloaded pack and it also allows saving at least two nuts per joining.

In the present invention, a nut closing and preloading the facet's joining is not necessary, neither is necessary a nut on top fixing the bolt position in the supporting structure; since a unique joint preloaded joining is carried out, which is thus structurally optimized, while in the state of the art two completely independent joinings are used, sharing the same "bar", the bolt.

In the heliostat mounting we can distinguish between the mounting and the canting at the mounting line, and the mounting in field of the heliostat upper assembly on the pedestal.

In the present invention, a number of flat washers are placed at the mounting line among the different parts of the structure supporting the facets to approximate to their final position. In this way, the assembly acquires a light curvature, which is part of the final curvature to be achieved.

Then grooved washers and thinner than the previous ones will be placed between the facets and the supporting structure. The definite orientation needed for the correct aiming of the heliostat is provided by means of these washers.

In a solar thermal plant there are hundreds of thousands of facets, each of them usually with four interface points with the heliostat structure, so there are hundreds of thousands of joinings which must be tightened and technically and economically optimized.

This discrete system allows the assumption, according to the thickness of the thinnest washer, the inherent error to be a discrete canting rather than a continuous one, so as to enjoy a canting which is easier to mount, but above all, an improvement of canting traceability of each facet in field; if a facet is broken in field with the continuous canting it is not possible, after having removed the broken facet, to guarantee that the new one will be placed at the same position without having to measure again, and that, in field is very complicated; with this system and keeping the washers that facet had in each supporting point it is guaranteed that the substituted facet keeps the canting of the previous one without having to measure anything, that is to say, costly recanting in field is not necessary.

Also, this canting is structurally more robust to carry loads since the whole washer-nut assembly acts as a preloaded joining and it also allows the saving of multiples nuts (two or even three) per joining.

In this way, we can say that the joining system between each facet and its supporting means in the heliostat, of a solar thermal plant of the invention, comprises:
- a connecting bolt between the facet and the supporting means,
- a mechanical element to receive the bolt, such as a riveted nut, located in the facet,
- a bolt preloading nut-washer assembly, located in the facet supporting means,
- at least one removable washer surrounding the bolt between the facet supporting means, for example a crossbeam, and the facet, said removable washers shall be understood to mean washers that can be placed and removed,
thus regulating the canting of heliostats, varying the number of washers between the facet supporting mean and the facet.

The regulation procedure of the canting of heliostats of a solar thermal plant, of the invention, comprises the stages of:
- introducing at the bolt section located between each facet and the facet supporting means, at least one removable washer,
- tightening the bolt preloading nut, closing the assembly from the mechanical element which receives the connecting bolt in the facet, up to the facet supporting mean,
thus, the joining is structurally optimized, with bolts that can have a smaller diameter, with a joining that only works by traction due to the preload and that in that way, it minimizes the facets deformations under service loads.

This procedure cannot be applied at the joining known in the state of the art, since the bolt works as a bar and hence, by traction, flexion and what it receives from the service loads.

In the procedure of the present invention, an individualized canting per facet is made, which minimizes the relative differential between the supports of each facet and it avoids having to introduce a plurality of washers in each support. If a global canting was carried out, equivalent to a "spherical calotte" to the whole heliostat, since heliostats have an average mirrored surface of around 120m², it would imply, if said calotte were made, that the lateral facets would have to be very separated from their supporting structure and thus, they would require multiple washers for their positioning.

On the other hand, according to the nature of the heliostat structure supporting the facets, the present invention offers the advantage of supplementing washers between parts of the structure, for example, between the crossbeams in relation to the lattices supporting them. Also, a whole line can be "lifted" in one of the planes. This can neither be suggested with the system used until now for canting.

### Brief description of the drawings

The following is a brief description of a series of drawings which help understand the invention better specifically relating to an embodiment of said invention presented as a non-limiting example thereof.
Figure 1 shows a profile of the system of the invention.
Figure 2 shows a section according to II-II of figure 4 to which a plurality of facets have been added.
Figure 3 shows a section according to III-III of figure 4 to which a plurality of facets have been added.
Figure 4 shows a heliostat diagram with a plurality of crossbeams resting on lattices, without facets.

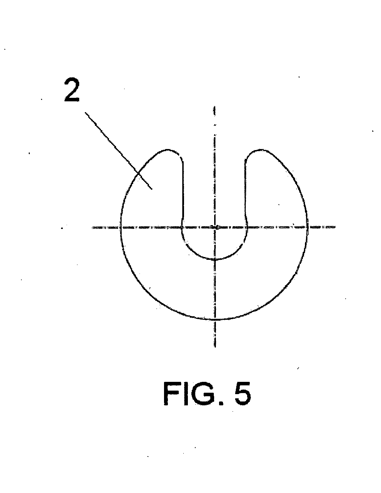

Figure 5 shows a plan view of a removable washer.

In the aforementioned figures a series of references are identified corresponding to the elements mentioned below, which is presented in a non-limiting manner:
1. Heliostat facet
2. Washer
3. Heliostat
4. Spacer
5. Bolt
6. Nut
7. Support washer
8. Crossbeam
9. Riveted nut
10. Lattice
11. Pedestal
12. Torsion tube
13. Actuation mechanism

### Detailed description of an embodiment

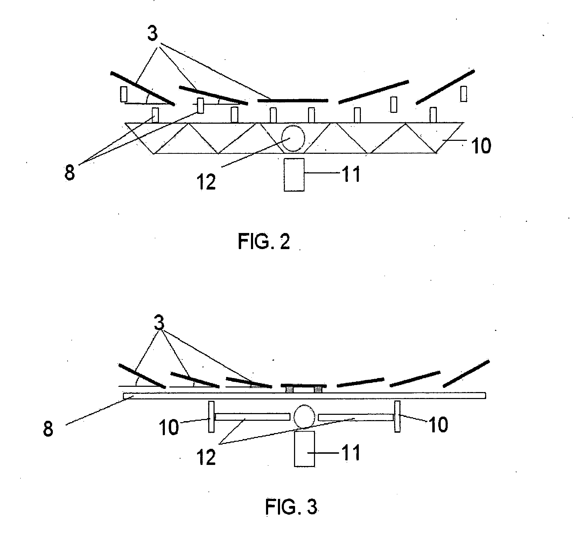

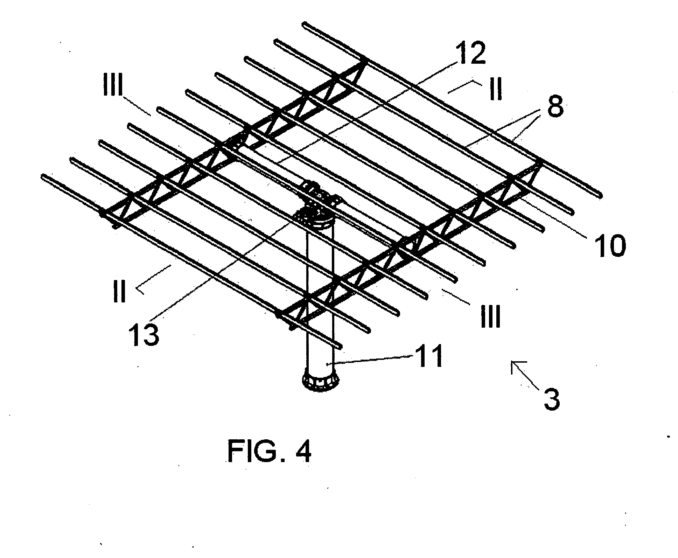

An heliostat (3), as it can be seen on figure 4, comprises a pedestal (11) in the upper end of which there is an actuating mechanism (13) that is in charge of the heliostat orientation movements, one of them is the rotation of the torsion tube (12) which moves at least one supporting lattice (10) on which a plurality of crossbeams (8) can be installed to improve the support of the facets (1) which are placed over them (Figures 2 and 3).

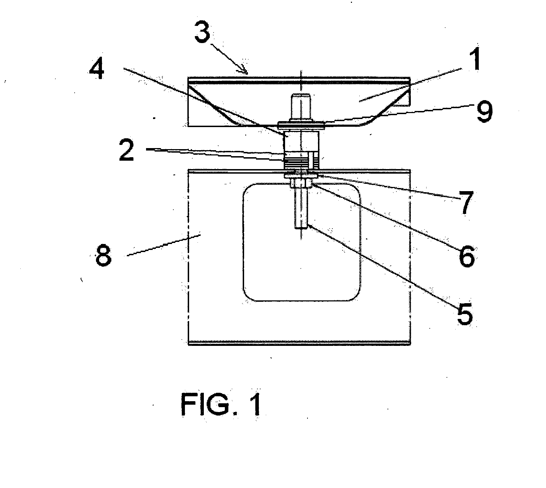

Figure 1 shows a particular case of the canting system of the invention, in which the facet (1) is joined to a crossbeam (8) which acts as a supporting means, by a bolt (5) joined at one end to the facet (5) by a riveted nut (9) and at the other end to the crossbeam (8) by a nut (6)-washer (7) assembly. Inserted between the crossbeam (8) and the facet (1) there is a plurality of removable washers (2) the number of which varies according to the desired canting angle.

For the heliostats (3) to have the necessary curvature to reflect solar radiation, it is necessary to provide every facet (1) with an appropriate inclination (Figures 2 and 3). This can be achieved by lifting the facet (1) supporting means (8) and particularly each facet (1) of each heliostat (3) according to its position in relation to the receptor.

The facet (1) supporting means can be a plurality of crossbeams (8), for each heliostat (Figures 2-4) or any other type of supporting structure for the facets (1), such as a plurality of lattices (10).

For the correct canting of heliostats the following steps are carried out:
- References are taken and the crossbeams (8) are mounted with the necessary washers (crossbeams washers are flat washers) in order to pre-align the heliostat in the direction of crossbeams in such a way that when they reach the site, measures can be appropriately taken and the number of washers in each support can be adjusted.
- Once the heliostat (3) is placed in site and the references are defined, we proceed to measure the height of the facet (1) supporting points and to align each heliostat (3) facet. Using these measurements, software carries out the necessary calculations to determine the number of washers needed in each support and issues a report with such information.
- Later, the number of washers (2) indicated in the report are placed in each support. These washers (2) are lock washers that is to say with an open section, so that in order to introduce them it is not necessary to remove the facet (1) from its position in the crossbeams (8). Their thickness can be variable, being the thinner ones preferably 1 mm, and the thickest ones 5 mm.

Washers (2) are placed between the facet (1) and the crossbeam (8), optionally a spacer can be added (4), in such case the washers (2) will be placed between the spacer (4) and the crossbeam (8), so as to maximize the supporting area thereof for the subsequent preload of the joining (as shown in figure 1).

Washers (2) must be well aligned between each other so that none of them stands out from the rest and all the washers (2) grooves must coincide in the same direction, preferably making them coincide in their direction with the slots of the crossbeams (8) for a better visualization when mounting. That is to say, the washer grooves will be seen from the crossbeam side where the windows are located. This correct canting of the washer grooves allows for a correct preload of the joining, which guarantees its correct operation under service loads and it prevents the joining to unpreload over time, and thus keeping the right orientation of the facet.
- After having placed the washers (2), each joining of each facet (1) is tighten and the measurement is repeated, the correct alignment of facets (1) and washers (2) is guaranteed and in each support the definite tightening is verified.

## Claims

1. Heliostat (3) canting regulator system of a solar thermal plant, **characterized in that** it comprises for each support of each heliostat facet:
- a connecting bolt (5) between the facet (1) and the supporting means (8, 10) of each facet (1) of each heliostat (3),
- a mechanical element (9) to receive the bolt (5), located in the facet (1),
- a nut (6)-washer (7) assembly for preloading the bolt (5), located in the facet (1) supporting means (8, 10),
- at least one removable washer (1) surrounding the bolt (5) between the facet (1) supporting means (8, 10) and the facet (1),
thus regulating the canting of heliostats (3), varying the number of washers (2) between the facet (1) supporting means (8, 10) and the facet (1).

2. System according to claim 1 **characterized in that** the removable washer is a washer with an open section.

3. System according to claims 1 and 2 where the facet supporting means is a crossbeam (8).

4. System according to claims 1 and 2 where the facet supporting means is a lattice (10).

5. System according to the preceding claims where the mechanical element (9) of the facet (1) is a riveted nut.

6. System according to the preceding claims **characterized in that** it comprises a spacing element (4) between the facet (1) and the facet (1) supporting means (8, 10).

7. Heliostat (3) canting regulation procedure of a solar thermal plant, which comprises the system of claim 1, **characterized in that**, starting from the horizontal position of the heliostat (3), it comprises the stages of:
- introducing in the bolt (5) section located between each facet (1) and the supporting means (8, 10), at least one removable washer (2),
- tightening the bolt (5) preloading nut (6), closing the assembly from the mechanical element (9) which receives the connecting bolt (5) in the facet (1), up to the facet (1) supporting means (8, 10).

8. Heliostat canting regulation procedure according to claim 7, **characterized in that** it comprises at least one measurement stage of the height of the facet (1) supporting points before introducing the washers (2), so that by means of a data processing means the number of washers to be inserted in the bolt (5) can be determined.

## Amended claims

### Amended claims in accordance with Rule 137(2) EPC.

**1.** Heliostat (3) canting regulator system of a solar thermal plant, said heliostat comprising a plurality of facets each of them with four interface points with the heliostat structure, **characterized in that** each interface point are regulating interface points that comprises:
- a connecting bolt (5) between the facet (1) and the supporting means (8, 10) of each facet (1) of each heliostat (3),
- a mechanical element (9) to receive the bolt (5), located in the facet (1),
- a nut (6)-washer (7) assembly for preloading the bolt (5), located in the facet (1) supporting means (8, 10),
- at least one removable washer (2) between the facet (1) supporting means (8, 10) and the facet (1),
thus regulating the canting of heliostats (3) in two planes, varying the number of washers (2) of each regulating support of each heliostat facet (1).

**2.** System according to claim 1 **characterized in that** the removable washer is a washer with an open section.

**3.** System according to claims 1 and 2 where the facet supporting means is a crossbeam (8).

**4.** System according to claims 1 and 2 where the facet supporting means is a lattice (10).

**5.** System according to the preceding claims where the mechanical element (9) of the facet (1) is a riveted nut.

**6.** System according to the preceding claims **characterized in that** it comprises a spacing element (4) between the facet (1) and the facet (1) supporting means (8,10).
